# EUROPÄISCHE PATENTANMELDUNG

(11) **EP 1 047 262 A2**
(43) Veröffentlichungstag der Anmeldung: **25.10.2000**
(21) Anmeldenummer: 00106383.3
(22) Anmeldetag: 24.03.2000
(51) Int. Cl.: H04N 1/32

(54) **Verfahren und Faxgerät zur Anrufweiterschaltung eines eingehenden Faxrufes**

(30) Priorität: 22.04.1999 DE 19918117
(71) Anmelder: Deutsche Telekom AG, 53113 Bonn (DE)
(72) Erfinder: Adam, Christof, 64859 Eppertshausen (DE)

(57) **Zusammenfassung**

Die Erfindung betrifft ein Verfahren und ein Faxgerät (20) zur Anrufweiterschaltung von Faxanrufen zu einem bestimmbaren anderen Faxgerät (30), wenn auf Grund gestörter interner Zustände im gerufenen Faxgerät (20) ein Sofortausdruck und/oder eine interne Speicherung eines zu empfangenden Faxdokumentes nicht möglich ist.

Die internen Zustände, wie Papier- und Tintenvorat, Papierstau, Kapazität des internen Speichers und ggf. Arbeitsbereitschaft eines angeschlossenen Personal Computers, der Faxausdruck und Speicherung vornehmen soll, werden laufend mittels entsprechender Sensoren überwacht. Bei auftretenden Störungen, werden erste Steuersignale erzeugt, die zur Vermittlungsstelle (50), an die das gerufene Faxgerät (20) angeschlossen ist, übertragen werden und dort die gewünschte Anrufweiterschaltung zu dem anderen Faxgerät (30) aktivieren.

Wenn durch weitere Überwachung der Sensoren festgestellt wird, daß die Störung nicht mehr weiterbesteht, dann werden zweite Steuersignale erzeugt, welche zur Vermittlungsstelle (50) übertragen werden, welche dort die Anrufweiterschaltung wieder deaktivieren.

Es können auch Benachrichtigungsfaxe zum rufenden Faxgerät (10) und/oder zum Faxgerät (30), an das die Faxnachrichten weitergeleitet werden sollen, übertragen werden, die eine Mitteilung über den Beginn und das Ende einer Anrufweiterschaltung enthalten.

## Beschreibung

Die Erfindung betrifft ein Verfahren und ein Faxgerät zur Anrufweiterleitung eines eingehenden Faxrufes zur Sicherstellung des Sofortausdrucks und/oder der internen Speicherung eines ankommenden Faxdokumentes, wenn dieses im gerufenen Faxgerät nicht ausgedruckt oder gespeichert werden kann.

Anordnungen und Verfahren zur Anrufweiterleitung bei Kommunikationsendgeräten, wie beispielsweise Telefon- oder Faxgeräten oder entsprechend ausgerüsteten Personal Computern (PC), die solche Funktionen unterstützen, sind an sich bekannt. Es gibt sie in unterschiedlichen Varianten, die jeweils an unterschiedliche Aufgaben und unterschiedliche Kommunikatiosnetze, wie beispielsweise das analoge T-Net der deutschen Telekom oder das digitale Netz ISDN, angepaßt sind. Bei den Aufgaben handelt es sich beispielsweise darum, wie bei Komfort-Telefonen im allgemeinen üblich, daß der Fernsprechteilnehmer (Kunde) den Zielanschluß und die Voraussetzungen, unter denen eine Verbindung weitergeleitet werden soll, durch Selbsteingabe festlegt. Er gibt dazu über seine Tastatur oder Wählscheibe, je nach Apparat, die Anschlußnummer des gewünschten Zielteilnehmers und den Code der gewünschten Weiterschalteart, z.B. nicht Erreichbarkeit oder der Wunsch nicht gestört zu werden, ein, die zur Vermittlungsstelle übertragen, dort gespeichert und, im Falle eines ankommenden Anrufes, die entsprechende Umsteuerung der Leitweglenkung aktivieren.

Beispielsweise gibt es im EURO-ISDN derzeit drei Varianten der Anrufweiterleitung:
a) Die sofortige Anrufweiterschaltung, bei der alle ankommenden Anrufe unmittelbar zu dem gewünschten Anschluß (Ersatzanschluß) weiter geschaltet werden,
b) Anrufweiterschaltung bei Nichtmelden (Weiterleitung nach 15 Sekunden), bei der eine ankommende Verbindung weitergeschaltet wird, wenn sie nicht innerhalb von 15 Sekunden angenommen wird und
c) Anrufweiterschaltung bei Besetzt, bei der nur bei besetzt meldendem Endgerät, bzw. besetzter Rufnummer die Verbindung weitergeschaltet wird.

Solche Anrufweiterleitungen oder -weiterschaltungen sind weltweit zu allen T-Net-Anschlüssen, Mobiltelefonanschlüssen sowie zu einer Sprachbox möglich. Bei Euro-ISDN-Anschlüssen können Anrufweiterleitungen für den gesamten Anschluß und beim Mehrgeräteanschluß auch je MSN/Anlagenanschluß für das Amtsleitungsbündel eingerichtet werden. Die Einleitung einer Anrufweiterschaltung erfordert auf Seite der Vermittlungstelle (VSt) die Bereitstellung einer entsprechenden Hard-und Software und auf der Endgeräteseite die Unterstützung durch das Endgerät, bzw. der TK-Anlage, wenn das Endgerät dort angeschlossen ist.

Eine Besonderheit der Anrufweiterschaltung ist die Weiterleitung eines ankommenden Anrufes während der Rufphase, die einem Teilnehmer die Möglichkeit bietet während des Verbindungsaufbauwunsches eines Anrufers durch Eingabe am Endgerät eine Weiterschaltung zu einem bereits vorprogrammierten Ziel zu veranlassen. Dieses erfordert jedoch besondere Hardware- und Software-technische Voraussetzungen, die an sich nur in ISDN-Netzen mit ihrem Steuer- und Signalisierungskanal (D-Kanal) möglich sind.

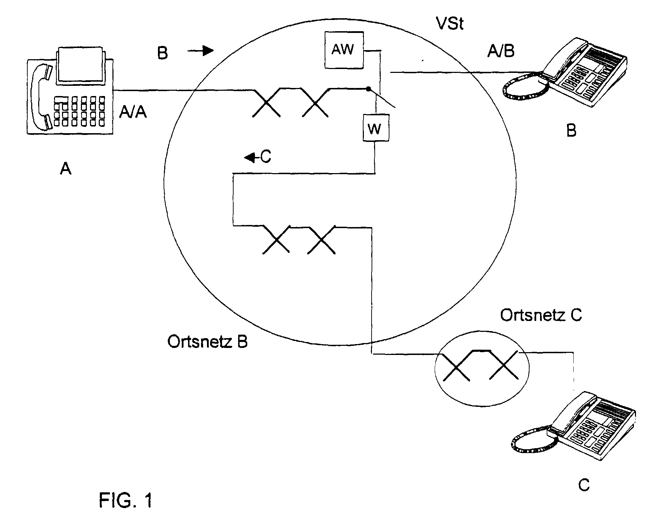

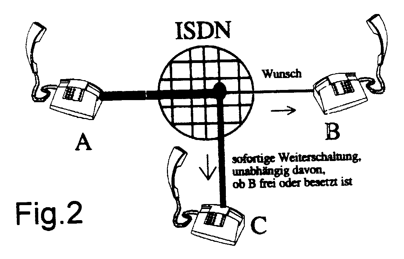

Beispiele von bestehenden Anrufweiterschaltungssystemen im T-Net und im ISDN-Netz zeigen die Fig. 1 und 2. Zunächst ist in Fig. 1 eine für das T-Net geeignete Anrufweiterschaltung in der Vermittlungsstelle VSt dargestellt, mit der Verbindungen eines Teilnehmers im Ortsnetz B zu einem Teilnehmeranschluß C in einem anderen Ortsnetz C weitergeleitet werden können. Es spielt für die Systemplanung keine Rolle, ob die für eine Leitwegsteuerung erforderlichen Wähler elektromechanische Wähler oder als rein elektronische Koppelfelder realisiert sind.

Der rufende Teilnehmer A ist, wie zu sehen, über eine Anschlußleitung AlA mit der zugeordneten Vermittlungsstelle VSt verbunden. Er wünscht eine Verbindung mit Teilnehmer B. Dieser hatte zuvor schon seiner Vermittlungsstelle VSt mittels Eingabe über seine Anschlußleitung AlB die Bedingung für eine Anrufweiterschaltung und die Anschlußnummer des Teilnehmers C zu dem der Anruf weitergeschaltet werden soll, mitgeteilt. Die Bedingung und die Zielrufnummer für die Anrufweiterschaltung wurden dadurch in der Vst gespeichert und können bei einem Anruf zu Teilnehmer B in einer Auswerteschaltung AW in der VSt geprüft werden, ob die gewünschte Bedingung für eine Anrufweiterschaltung vorliegt. Ist dies der Fall, dann wird von der Auswerteschaltung ein Umschalter U über die gestrichelte Steuerleitung so eingestellt, daß eine Weiterleiteschaltung W die gewünschte Verbindung zu Zielteilnehmer C im Ortsnetz C herstellt. Ein ähnliches Beispiel für eine Anrufweiterschaltung im ISDN-Netz zeigt Figur 2, in welchem ein Teilnehmer A eine Verbindung mit Anschluß B wünscht. Teilnehmer A hat jedoch eine Anrufweiterschaltung zu Anschluß C beantragt, und zwar mit der Bedingung, daß generell jeder Anruf zu seinem Anschluß B sofort auf Anschluß C umgeleitet werden soll.

Eine Anrufweiterschaltung ist auch bei Faxgeräten bekannt (vgl. T-Fax 360 G4 der Deutschen Telekom). Es wird dort die Funktion CFU verwendet, die dem Faxteilnehmer (Kunden) die Möglichkeit bietet, durch manuelle Aktivierung, d.h. die Eingabe der gewünschten Zielrufnummer, eingehende Anrufe permanent an einen anderen gewünschten Anschluß weiterzuleiten.

Damit ist aber der bei Faxgeräten besonders wichtige Aspekt eines ordnungsgemäßen und in aller Regel sofortigen Ausdrucks eines zu übertragenen Dokumentes oder dessen Speicherung im lokalen Faxgerät, was von einigen Faktoren abhängt, die den internen Zustand eines solchen Faxgerätes widerspiegeln, noch nicht berücksichtigt.

Diese wichtigen Faktoren betreffen einmal das Vorhandensein von ausreichend Papier und Tinte im Faxgerät. Ferner muß der Papiertransport in Ordnung sein, d.h. es darf kein Papierstau vorliegen und der Empfangsspeicher des Faxgerätes muß noch genügend Speicherkapazität aufweisen, um Faxsendungen zwischenzuspeichern. Wenn ein angeschlossener Personal Computer die Funktion des Empfangs und Ausdruckes eines zu empfangenden Faxdokumentes ausführen soll, dann muß auch dieser hinsichtlich seiner Empfangs-und Ausdruckbereitschaft überprüft werden.

Von einigen Faxgeräten ist es schon bekannt, daß sie über Sensoren für Papierstau und Papier-und Tintenmangel verfügen, die bei Erreichen eines entsprechenden Kriteriums ansprechen und eine entsprechende Warnmeldung durch Leuchtdioden, Pieptöne und/oder Anzeigen in einem Display erzeugen.

Ferner sind Faxgeräte bekannt, die ebenfalls entsprechende Sensoren für Papierstau, Papier-und Tintenmangel udgl. aufweisen, aber lediglich den Faxempfang, nicht jedoch den Sofortausdruck sicherstellen, indem sie die eingehenden Seiten in einem lokalen Speicher oder ggf. in einem angeschlossenen Personal Computer (PC) ablegen (vgl. T-Fax 362 PC der Deutschen Telekom).

Die vorstehend genannten Warnsignale richten sich an den Benutzer eines Faxgerätes, um ihm anzuzeigen, daß momentan ein Faxausdruck von seinem Faxgerät nicht möglich ist. Ist der Benutzer nicht anwesend, wenn ein Faxdokument übertragen wird, dann kann auch kein Ausdruck erfolgen, und die Nachricht geht zumindest dann verloren, wenn kein Auffangspeicher vorhanden oder dieser voll ist.

Der Ausdruck oder die geräteinterne Speicherung eines Faxdokumentes ist auch in dem Fall der o.g. permanenten Anrufweiterschaltung nicht möglich, wenn das Zielfaxgerät zum Ausdruck und zur internen Speicherung nicht bereit ist. Da eine Anrufweiterleitung von einem Kommunikationsendgerät, das bereits Ziel einer Anrufweiterleitung war, nicht mehr erlaubt ist, muß damit gerechnet werden, daß ein Faxausdruck dieses Dokumentes unter bestimmten Umständen nicht mehr möglich ist.

Es ist daher die Aufgabe der Erfindung, eine Lösung anzugeben, mit deren Hilfe es möglich ist, sicherzustellen, daß ein Sofortausdruck und/oder eine interne Speicherung von eingehenden Faxdokumenten auch dann erfolgen kann, wenn das empfangende Faxgerät hierzu nicht bereit ist, weil eines oder mehrere der oben erwähnten Kriterien, wie Papierstau sowie Papier-und/oder Tintenmangel vorliegen.

Gelöst wird diese Aufgabe zum einen durch die Verfahrensschritte des Anspruchs 1.

Um sicherstellen zu können, daß ein eingehender Faxruf auch tatsächlich weiterverarbeitet und das empfangene Faxdokument sofort ausgedruckt und/oder in einem internen Gerätespeicher zwischengespeichert werden kann, weist das Verfahren die folgenden Schritte auf:
a) Überwachen vorbestimmter Zustände des Faxgerätes;
b) das Faxgerät erzeugt automatisch ein erstes Steuersignal (ASW1) zur Aktivierung der Anrufweiterschaltung, um einen für das Faxgerät bestimmten Faxruf zu der oder jeder vorbestimmten Zielendeinrichtung weiterzuleiten, wenn aufgrund der überwachten Zustände festgestellt wird, daß das Faxgerät nicht empfangsbereit ist;
c) das Faxgerät erzeugt automatisch ein zweites Steuersignal (AWS2) zur Deaktivierung der Anrufweiterschaltung, wenn aufgrund der überwachten Zustände festgestellt wird, daß das Faxgerät wieder empfangsbereit.

Damit sowohl das rufende Faxgerät, welches ein Faxdokument zu dem gewünschten Faxgerät senden möchte, als auch die vorbestimmte Zielendeinrichtung über die aktivierte Anrufweiterschaltung informiert werden können, wird ein drittes Steuersignal FXS1 erzeugt, das einen in einem internen Speicher des Faxgerätes gespeicherten ersten Benachrichtigungstext darüber, daß eine Anrufweiterschaltung erfolgt, adressiert, ausliest und als Faxnachricht zum ruf enden Faxgerät und/oder zur Zielendeinrichtung überträgt, und ein viertes Steuersignal FXS2 nach erfolgter Deaktivierung der Anrufweiterschaltung erzeugt, das einen im internen Speicher des Faxgerätes gespeicherten zweiten Benachrichtigungstext darüber, daß die Anrufweiterschaltung wieder aufgehoben ist, adressiert, ausliest und als Faxnachricht zum rufenden Faxgerät und/oder zur Zielendeinrichtung überträgt.

Eine weitere Ausgestaltung des erfindungsgemäßen Verfahrens ist dadurch charkterisiert, daß zur Überwachung der Zustände Sensoren zur Meldung von Papiermangel, zur Meldung von Tintenmangel, zur Meldung von Papierstau, S4 Meldung, ob der Empfangsspeicher noch über ausreichend Speicherkapazität verfügt und/oder an einer Schnittstelle zu einem PC zur Meldung, ob der PC zum Faxempfang bereit ist, zyklisch mit einer bestimmten Wiederholungsrate WL1,WL2 parallel oder sequentiel abgefragt werden.

Je nach Systemaufbau wird die Anrufweiterschaltung in einer Vermittlungsstelle, einer TK-Anlage oder in dem Faxgerät für den Fall selbst durchgeführt, daß die Zielendeinrichtung direkt mit dem Faxgerät verbunden ist. Wird die Anrufweiterschaltung in der dem Faxgerät zugeordneten Vermittlungsstelle oder der TK-Anlage durchgeführt, dann überträgt das Faxgerät die Steuersignale zum Aktivieren und Deaktivieren der Anrufweiterschaltung dorthin.

Die Ablaufsteuerung im Faxgerät zur Erzeugung des ersten AWS1 und zweiten Steuersignals AWS2 ist durch folgende Verfahrensschritte gekennzeichnet:
a) es werden parallel oder sequentiell die Meldungen der Sensoren (S1 bis S5) abgefragt und auf Korrektheit geprüft;
b) es wird aus dem Prüfergebnis nach Schritt a) festgestellt, ob das Faxgerät empfangsbereit ist;
c) wenn dies der Fall ist, wird die Wiederholung der Schritte a) und b) mit der Wiederholungsrate (WL1) vorgenommen, und wenn dies nicht der Fall ist, wird das Verfahren mit Schritt d) fortgesetzt;
d) das erste Steuersignal (AWS1) wird erzeugt und zur Aktivierung der Anrufweiterschaltung weitergeleitet;
e) analog zu Schritt a) werden die Sensoren (S1 bis S5) abgefragt und deren Meldungen überprüft;
(f) es wird aus den Prüfergebnissen festgestellt, ob die Empfangsbereitschaft des Faxgerätes wieder hergestellt ist;
g) ist dies nicht der Fall, werden die Schritte e) und f) mit der Wiederholungsrate (WL2) solange durchgeführt, bis die Empfangsbereitschaft festgestellt wird;
h) wenn das Faxgerät wieder empfangsbereit ist, wird das zweite Steuersignal (AWS2) erzeugt und weitergeleitet, um die Anrufweiterschaltung wieder zu deaktivieren; und
i) wiederholen der Schritte a) bis i).

Das technische Problem wird mit den Merkmalen des Anspruchs 6 gelöst. Dazu umfasst das Faxgerät eine Schnittstelle zum Anschalten des Faxgerätes an eine Netzabschlußeinrichtung oder eine TK-Anlage, wenigstens einen Sensor zum Erfassen eines vorbestimmten Zustandes des Faxgerätes, einen programmierbarer Mikroprozessor zum Erzeugen eines ersten Steuersignals zum automatischen Aktivieren einer Einrichtung zur Weiterschaltung eines Faxrufs an wenigstens eine vorbestimmte Zieleinrichtung, wenn der Sensor einen ersten Gerätezustand erfasst, und zum Erzeugen eines zweiten Steuersignals zum automatischen Deaktivieren der Einrichtung zur Weiterschaltung eines Faxrufs, wenn der Sensor einen zweiten Gerätezustand erfasst.

In vorteilhafter Weise ist ein Speicher zum Ablegen einer ersten Information über den Beginn der Anrufweiterschaltung und einer zweiten Information über das Ende der Anrufweiterschaltung vorgesehen. Der Mikroprozessor kann dafür sorgen, daß nach Erzeugung des ersten Steuersignals die erste Information ausgelesen und zu einer rufenden Endeinrichtung und/oder zur Zielendeinrichtung übertragen und nach Erzeugung des zweiten Steuersignals die zweite Information ausgelesen zur rufenden und/oder Zielendeinrichtung übertragen wird.

Um die für die Empfangsbereitschaft des Faxgeräts erforderlichen Zustände überwachen zu können ist ein Sensor zur Meldung eines Papiermangels, ein Sensor zum Melden eines Tintenmangels, ein Sensor zur Meldung eines Papierstaus und ein Sensor zur Meldung eines Überlaufs des Empfangsspeichers vorgesehen.

Durch die vorliegende Erfindung wird somit der Vorteil erreicht, daß ein Ausdruck und/oder eine interne Speicherung von Faxdokumenten auch dann sichergestellt ist, wenn das Faxgerät, für das ein Faxanruf eingeht, nicht zum Ausdrucken und/oder Speichern bereit ist, weil beispielsweise bestimmte geräteinterne Zustände solche Ausdrucke nicht erlauben.

Im folgenden wird die Erfindung an Hand eines durch Zeichnungen erläuterten Ausführungsbeispiels näher beschrieben. Es zeigen:
- Fig. 1 und 2: Prinzipdarstellungen bekannter Anrufweiterschaltungen, die in der Vermittlungsstelle eines analogen oder digitalen Fernsprechnetzes an Hand der vom Teilnehmer eingegebenen Zielrufnummer und Weiterschalteart eine Anrufweiterschaltung durchführen,
- Fig. 3: eine Darstellung des erfindungsgemäßen Verfahrensablaufs zur Aktivierung der Anrufweiterschaltung für ein Faxgerät, das auf Grund bestimmter interner Zustände zu einem Sofortausdruck und/oder zu einer internen Speicherung eines eingehenden Faxdokumentes nicht fähig ist, und
- Fig. 4: eine vereinfachte Ansicht eines Kommunikationsnetzes mit drei angeschalteten Faxgeräten.

Wie bereits erwähnt wurde, soll die vorliegende Erfindung dazu dienen, stets Sofortausdrucke und/oder eine interne Speicherung von eingehenden Faxdokumenten sicherzustellen. Störungen, die auf Grund von bestimmten internen Zuständen des Faxgerätes, meist sporadisch, auftreten, wie beispielsweise Tinten-und Papiermangel, sowie Papierstau in der Papiertransportvorrichtung im Faxgerät, und wenn der interne Speicher voll ist, sollen nicht dazu führen, daß ein Sofortausdruck und/oder eine interne Speicherung nicht mehr möglich sind.

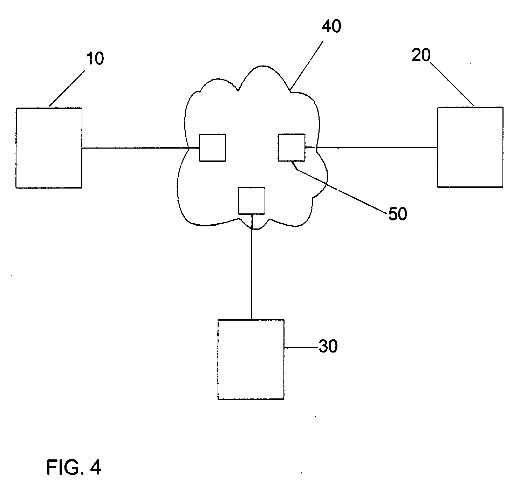

Fig 4 zeigt beispielsweise ein herkömmliches ISDN-Fernsprechnetz 40, an das der einfacheren Darstellung wegen lediglich drei Faxgeräte 10, 20 und 30 angeschaltet sind. In diesem Beispiels fungiert das Faxgerät 10 als das Faxgerät, welches ein Faxdokument an das Faxgerät 20 senden möchte. An das Faxgerät 30 werden Faxrufe weitergeleitet, wenn das Faxgerät 20 nicht empfangsbereit ist. Das Faxgerät 20 ist über eine Teilnehmeranschlußleitung mit der Vermittlungsstelle 50 verbunden, die eine Einrichtung zur Weiterschaltung von Faxrufen enthält. Die Einrichtung zur Weiterschaltung von Faxrufen wird von dem Faxgerät 20 aus automatisch aktiviert und deaktiviert. Hierzu weist das Faxgerät 20 einen programmierbaren Mikroprozessor auf, der Steuersignale zum Aktivieren und Deaktivieren des Leistungsmerkmals 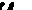 Anrufweiterschaltung" erzeugen kann. Darüber hinaus kann am Faxgerät 20 die Zieladresse des Faxgerätes 30 eingegeben und von dort zur Vermittlungsstelle 50 übertragen werden, um die Anrufweiterschaltung zum Faxgerät 30 zu ermöglichen. Der Mikroprozessor ist mit mehreren Sensoren verbunden, die beispielsweise einen Papiermangel, Tintenmangel, Papierstau oder einen Überlauf des Empfangsspeichers des Faxgerätes 20 melden können.

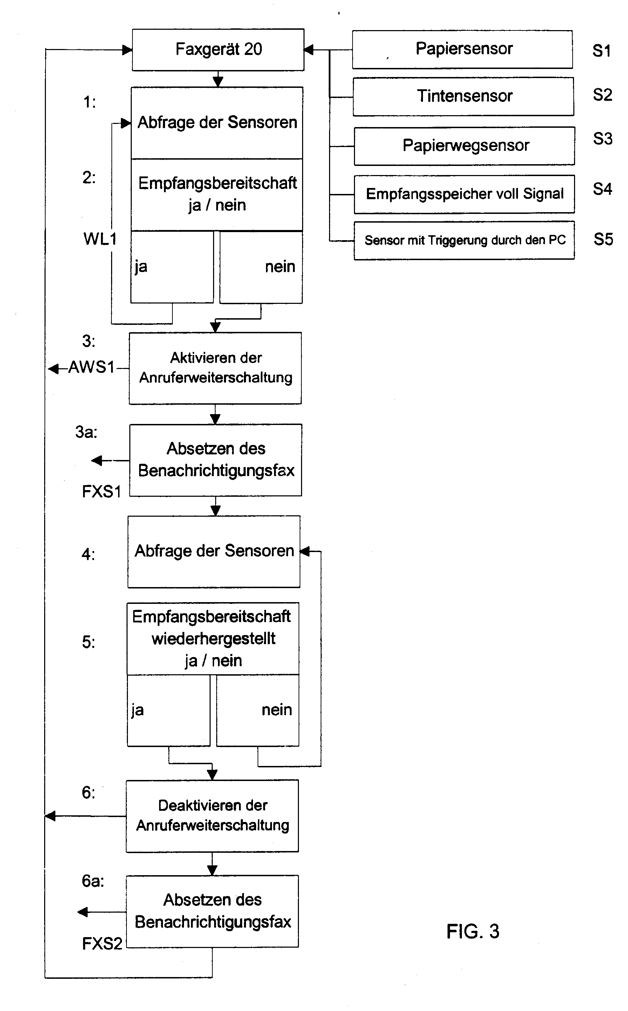

Der Ablauf der Anrufweiterschaltung wird nachfolgend näher erläuter Es ist deshalb ein in Figur 3 dargestelltes Verfahren vorgesehen, das beispielsweise im Faxgerät 20 mit einer vorgebbaren Wiederholungsrate automatisch abläuft und Steuersignale erzeugt, die sich an die bestehenden Hard-und Softwareresourcen der entsprechenden Netzwerkkomponenten der Leitweglenkung für die Durchführung von Anrufweiterschaltungen richten und somit automatisch, eine Anrufweiterleitung beispielsweise zum Faxgerät 30 bewirken, wenn das Faxgerät 20 auf Grund der bestimmten genannten internen Zustände den Sofortausdruck und/oder die interne Speicherung eines vom Faxgerät 10 kommenden Faxdokumentes nicht mehr möglich macht.

Wo diese Steuersignale, meist in den Vermittlungsstellen, eingespeist werden müssen, ist weitgehend systemabhängig.

Wenn, wie erwähnt, beispielsweise das Faxgerät 20 für einen Sofortausdruck von einer vom Faxgerät 10 eingehenden Faxnachricht nicht bereit ist, dann werden entsprechende Steuersignale zur Aktivierung der Anrufweiterschaltung automatisch vorn Faxgerät 20 über die Anschlußleitung zur Anrufweiterschaltungs-Einrichtung in der Vermittlungstelle 50 übertragen. So könnte beispielsweise eine Anrufweiterschaltung in einem analogen T-Net vorgenommen werden. Ähnlich wäre auch eine Anrufweiterschaltung in einem digitalen Netz durchführbar.

Zur Erzeugung der genannten Steuersignale wird im Faxgerät 20 ein ganz spezifisches inherentes Betriebsverfahren automatisch durchgeführt, das, wie Figur 3 zeigt, von einem empfangsbereiten Faxgerät ausgeht, das über seine Anschlußleitung mit seiner zugehörigen Vermittlungstelle 50 verbunden ist und schrittweise die genannten Steuersignale erzeugt.

Im Schritt 1 dieses Verfahrens werden parallel oder sequentiell die internen Sensoren (nebst den zugehörigen Aktoren) des Faxgerätes 20 abgefragt und geprüf, ob ein Papiermangel, ein Tintenmangel oder ein Papierstau vorliegen, oder ob der Empfangsspeicher voll ist. Ist an das Faxgerät 20 ein Personal Computer zur Ausgabe und Speicherung eingehender Faxnachrichten angeschlossen, überprüft ein weiterer Sensor, ob der Personal Computer arbeitsbereit ist.

Es folgt Schritt 2, in dem aus dem Prüfergebnis bezüglich der Ausgangssignale der genannten Sensoren, das im vorhergehenden Schritt gebildet wurde, festgestellt wird, ob eine Empfangsbereitschaft des Faxgerätes 20 vorliegt. Wenn dieses der Fall ist, tritt der Verfahrensablauf in die Wiederholung der Schritte 1 und 2 mit einer bestimmeten Wiederholungsrate WL1 solange ein, bis eine Störung der genannten Art eintritt. In diesem Falle wird der Betriebsablauf mit Schritt 3 fortgesetzt.

In diesem Schritt 3 wird ein erstes Steuersignal AWS1 erzeugt und zur Vermittlungsstelle 50 übertragen, wo es die Anrufweiterschaltung, beispielsweise bestehend aus Aw und W in Figur 1, aktiviert.

Soll dem rufenden Faxteilnehmer 10 und dem Faxgerät 30, an das die für das Faxgerät 20 bestimmten Faxrufe weitergeleitet werden sollen, eine Benachrichtigung über eine stattfindende Anrufweiterschaltung mitgeteilt werden, dann wird nach Schritt 3 ein Schritt 3a ausgeführt, in dem nach der Aktivierung der Anrufweiterschaltung ein drittes Steuersignal FXS1 erzeugt wird. Dieses Signal steuert die Adressensteuerung des im Faxgerät 20 enthaltenen Speichers an, die das Speicherfeld, in dem der Benachrichtigungstext gespeichert ist, adressiert und das Auslesen dieses Textes veranlaßt. Mit dem Auslesen erfolgt auch eine Übertragung des Textes über die Anschlußleitung zu dem rufenden Faxgerät 10 und dem Faxgerät 30.

Um festzustellen, ob die Empfangsbereitschaft nicht inzwischen wieder hergestellt wurde, wird ein dem Schritt 1 sehr ähnlicher Schritt zum Testen der Sensoren durchgeführt und geprüft, ob noch ein oder mehrere Sensoren S1 bis S5 entsprechende Ausgangssignale liefern. Wenn dieses der Fall ist, müssen die Schritte 4 und 5 mit einer Wiederholungsrate WL2 noch solange weiter durchlaufen werden, bis keiner der Sensoren mehr ein entsprechendes Ausgangssignal liefert, das eine Störung des Faxgerätes 20 kennzeichnet.

In diesem Fall wird in Schritt 5 festgestellt, daß wieder Empfangsbereitschaft vorliegt und im Faxgerät 20 ein Sofortausdruck eines Faxdokumentes wieder möglich ist.

Es folgt darauf der Schritt 6, in welchem das zweite Steuersignal AWS2 erzeugt wird. Dieses wird über die Anschlußleitung zur Vermittlungsstell 50 übertragen und deaktiviert dort wieder die Einrichtung zur Anrufweiterschaltung für den Teilnehmer 20.

Soll auch hier den Faxteilnehmern 10 und 30 mitgeteilt werden, daß die Anrufweiterschaltung wieder aufgehoben ist, dann wird Schritt 6a durchgeführt, in welchem nach erfolgter Deaktivierung der Anrufumleitung ein viertes Steuersignal FXS2 erzeugt wird, das, wie schon zu Schritt 3a erläutert, den Benachrichtigungstext aus dem Speicher des Faxgerätes 20 ausliest und zu dem rufenden Faxgerät 10 und dem Faxgerät 30 über die Anschlußleitung überträgt.

Nach Ausführung des letzten Verfahrenschrittes dieser Ablaufsteuerung, das ist Schritt 6, wenn kein Benachrichtigungsfax abgesetzt werden soll, oder Schritt 6a, wenn die Aufhebung der Anrufweiterschaltung dem rufenden Faxgerät 10 und dem Faxgerät 30 mitgeteilt werden soll, dann kehrt die Ablaufsteuerung zu Schritt 1 zurück und beginnt einen neuen Durchlauf. Dieses Prozedere kann solange geschehen, bis eine gewollte Abschaltung dieser Funktion durch Unterbrechung der Ablaufzyklen erfolgen soll.

Die Anrufweiterschaltung gemäß der Erfindung ist nicht nur in analogen und digitalen Netzen der großen Netzwerkbetreiber einsetzbar, sondern auch in den privaten TK-Anlagen , sofern diese generell eine Anrufweiterschaltung in ihrer Vermittlungsarchitektur und ihrem Netzwerk unterstützen.

## Patentansprüche

1. Verfahren zur Anrufweiterschaltung eines für ein Faxgerät (20) bestimmten Faxrufes zu wenigstens einer vorbestimmten Zieleinrichtung (30) mit folgenden Verfahrensschritten:
a) Überwachen vorbestimmter Zustände des Faxgerätes (20);
b) das Faxgerät (20) erzeugt automatisch ein erstes Steuersignal (ASW1) zur Aktivierung der Anrufweiterschaltung, um einen für das Faxgerät (20) bestimmten Faxruf zu der oder jeder vorbestimmten Zieleinrichtung (30) weiterzuleiten, wenn aufgrund der überwachten Zustände festgestellt wird, daß das Faxgerät (20) nicht empfangsbereit ist;
c) das Faxgerät (20) erzeugt automatisch ein zweites Steuersignal (AWS2) zur Deaktivierung der Anrufweiterschaltung, wenn aufgrund der überwachten Zustände festgestellt wird, daß das Faxgerät (20) wieder empfangsbereit.

2. Verfahren nach Anspruch 1,
dadurch gekennzeichnet, daß bei aktivierter Anrufweiterschaltung ein drittes Steuersignal (FXS1) erzeugt wird, das einen ersten in einem internen Speicher des Faxgerätes (20) gespeicherten Benachrichtigungstext darüber, daß eine Anrufweiterschaltung erfolgt, adressiert, ausliest und als Faxnachricht zu einem rufenden Faxgerät (10) und/oder zur Zielendeinrichtung (30) überträgt, und daß ein viertes Steuersignal (FXS2) nach erfolgter Deaktivierung der Anrufweiterschaltung erzeugt wird, das einen zweiten im internen Speicher des Faxgerätes (20) gespeicherten Benachrichtigungstext darüber, daß die Anrufweiterschaltung wieder aufgehoben ist, adressiert, ausliest und als Faxnachricht zum rufenden Faxgerät (10) und/oder zur Zielendeinrichtung (30) überträgt.

3. Verfahren nach Anspruch 1, dadurch gekennzeichnet, daß zur Überwachung der Zustände des Faxgerätes (20) Sensoren (S1-S5) zur Meldung von Papiermangel, zur Meldung von Tintenmangel, zur Meldung von Papierstau, zur Meldung, ob der Empfangsspeicher noch über ausreichend Speicherkapazität verfügt und/oder an der Schnittstelle zu einem PC zur Meldung, ob der PC zum Faxempfang bereit ist, zyklisch mit einer bestimmten Wiederholungsrate (WL1,WL2) parallel oder sequentiel abgefragt werden.

4. Verfahren nach einem der Ansprüche 1 bis 3, dadurch gekennzeichnet, daß die Anrufweiterschaltung in einer Vermittlungsstelle (50), einer TK-Anlage oder in dem Faxgerät (20) durchgeführt wird.

5. Verfahren nach einem der Ansprüche 1 bis 4
dadurch gekennzeichnet, daß zur Erzeugung des ersten (AWS1) und zweiten Steuersignals (AWS2) folgende Verfahrensschritte ausgeführt werden:
a) es werden parallel oder sequentiell die Meldungen der Sensoren (S1 bis S5) des Faxgerätes (20) abgefragt und auf Korrektheit geprüft;
b) es wird aus dem Prüfergebnis nach Schritt a) festgestellt, ob das Faxgerät (20) empfangsbereit ist;
c) wenn dies der Fall ist, wird die Wiederholung der Schritte a) und b) mit der Wiederholungsrate (WL1) vorgenommen, und wenn dies nicht der Fall ist, wird das Verfahren mit Schritt d) fortgesetzt;
d) das erste Steuersignal (AWS1) wird erzeugt und zur Aktivierung der Anrufweiterschaltung weitergeleitet;
e) analog zu Schritt a) werden die Sensoren (S1 bis S5) abgefragt und deren Meldungen überprüft;
f) es wird aus den Prüfergebnissen festgestellt, ob die Empfangsbereitschaft des Faxgerätes (20) wieder hergestellt ist;
g) ist dies nicht der Fall, werden die Schritte e) und f) mit der Wiederholungsrate (WL2) solange durchgeführt, bis die Empfangsbereitschaft festgestellt wird;
h) wenn das Faxgerät (20) wieder empfangsbereit ist, wird das zweite Steuersignal (AWS2) erzeugt und weitergeleitet, um die Anrufweiterschaltung wieder zu deaktivieren; und
i) wiederholen der Schritte a) bis i).

6. Faxgerät zur Durchführung des Verfahrens nach einem der Ansprüche 1 bis 5,
gekennzeichnet durch
a) eine Schnittstelle zum Anschalten des Faxgerätes an eine Netzabschlußeinrichtung oder eine TK-Anlage;
b) wenigstens einen Sensor zum Erfassen eines vorbestimmten Zustandes des Faxgerätes;
c) ein programmierbarer Mikroprozessor zum Erzeugen eines ersten Steuersignals zum automatischen Aktivieren einer Einrichtung zur Weiterschaltung eines Faxrufs an wenigstens eine vorbestimmte Zielendeinrichtung, wenn der Sensor einen ersten Gerätezustand erfasst, und zum Erzeugen eines zweiten Steuersignals zum automatischen Deaktivieren der Einrichtung zur Weiterschaltung eines Faxrufs, wenn der Sensor einen zweiten Gerätezustand erfasst.

7. Faxgerät nach Anspruch 6,
gekennzeichnet durch
einen Speicher zum Ablegen einer ersten Information über den Beginn der Anrufweiterschaltung und einer zweiten Information über das Ende der Anrufweiterschaltung, wobei der Mikroprozessor nach Erzeugung des ersten Steuersignals die erste Information ausliest und zu einer rufenden Endeinrichtung und/oder zur Zielendeinrichtung überträgt und nach Erzeugung des zweiten Steuersignals die zweite Information ausliest und zur rufenden und/oder Zielendeinrichtung überträgt.

8. Faxgerät nach Anspruch 6 oder 7,
gekennzeichnet durch
einen Empfangsspeicher,
einen Sensor zur Meldung eines Papiermangels,
einen Sensor zum Melden eines Tintenmangels,
einen Sensor zur Meldung eines Papierstaus und
einen Sensor zur Meldung eines Überlaufs des Empfangsspeichers.
